# EUROPÄISCHE PATENTSCHRIFT

(11) **EP 0 457 327 B1**
(45) Veröffentlichungstag und Bekanntmachung des Hinweises auf die Patenterteilung: **03.08.1994**
(21) Anmeldenummer: 91107966.3
(22) Anmeldetag: 16.05.1991
(51) Int. Cl.: G01B 5/04, D04B 27/22

(54) **Vorrichtung zur Messung der Fadenlänge der von einem Kettbaum einer Kettenwirkmaschine abgezogenen Fäden**
Device for measuring the length of a string yarn from a warp beam of a warp knitting machine
Dispositif pour mesurer la longueur de fil tiré par l'ensouple de tissage d'un métier à mailles

(30) Priorität: 16.05.1990 DE 4015769
(43) Veröffentlichungstag der Anmeldung: 21.11.1991
(73) Patentinhaber: LIBA Maschinenfabrik GmbH, D-95119 Naila (DE)
(72) Erfinder: Wirth, Rudi, W-8678 Schwarzenbach (DE); Jahn, Wolfgang, W-8671 Issigau (DE)
(74) Vertreter: Bardehle, Heinz, Dipl.-Ing.

(56) Entgegenhaltungen:
- GB-A- 2 123 954

## Beschreibung

Die Erfindung bezieht sich auf eine Vorrichtung gemäß dem Oberbegriff des Patentanspruchs.

Eine derartige Vorrichtung ist aus der DE-OS 23 07 152 bekannt. Bei der bekannten Vorrichtung treibt die am Kettbaum anliegende Andrückrolle einen Signalgenerator, dessen Signale als Längensignale ein Maß für die vom Kettbaum abgezogene Fadenlänge darstellen. Diese Längensignale können dann in üblicher Weise für eine Regelung des Antriebs des Kettbaumes verwendet werden. Die Andrückrolle ist auf einem in Richtung auf den Kettbaum vorgespannten Schwenkarm gelagert. Im Falle eines Auswechselns des Kettbaumes wird der Schwenkarm vom Kettbaum weggeschwenkt, womit die Andrückrolle ihren Berührungskontakt mit dem Kettbaum verliert und sofort stehenbleibt. Wenn dieses Wegschwenken des Schwenkarmes während des normalen Betriebs einer Kettenwirkmaschine geschieht, dann wird die Regelung des Antriebs des Kettbaumes gestört, da durch das Stehenbleiben der Andrückrolle vorgetäuscht wird, daß keine Fadenlieferung stattfindet. Die Folge davon wäre eine sofortige Beschleunigung des Antriebs des Kettbaumes, was zu einem Durchhängen der Fäden und somit zu einer sofortigen Störung des Betriebs der Kettenwirkmaschine führen würde.

Der Erfindung liegt die Aufgabe zugrunde, die Vorrichtung mit dem Schwenkarm so zu gestalten, daß auch bei einem während des Betriebs der Kettenwirkmaschine erfolgendem Wegschwenken des Schwenkarmes eine Störung vermieden wird.

Erfindungsgemäß geschieht dies durch die im Patentanspruch angegebenen Maßnahmen.

Durch die Anbringung der Andrückrolle auf einem Hebelsystem, bestehend aus Schwenkarm und daran angelenktem Hebel, läßt sich der Vorgang des Wegschwenkens des Schwenkarmes in drei Phasen unterteilen, nämlich den Beginn des Wegschwenkens des Schwenkarmes mit sich dabei gegenüber dem Schwenkarm verdrehendem Hebel, währenddessen die Andrückrolle noch in Berührungskontakt mit dem Kettbaum verbleibt, die bei der Verdrehbewegung des Hebels erfolgende Betätigung des Endschalters, die gegebenenfalls zum Abschalten der Kettenwirkmaschine ausgenutzt wird, und die nach Betätigung des Endschalters erfolgende weitere Verschwenkbewegung des Schwenkarmes, bei der die Andrückrolle ihren Berührungskontakt mit dem Kettbaum verliert, ohne daß sich dabei an der Stellung des Endschalters etwas ändert. Wenn also z.B. unbeabsichtigt während des Betriebs der Kettenwirkmaschine der Schwenkarm vom Kettbaum weggeschwenkt wird, so bleibt wegen des zunächst aufrechterhaltenen Berührungskontaktes zwischen Andrückrolle und Kettbaum eine von der Andrückrolle beeinflußte Regelung erhalten, bis während noch bestehendem Berührungskontakt der Endschalter betätigt wird, mit dem dann die Kettenwirkmaschine abgeschaltet werden kann. Wenn dann schließlich die Andrückrolle ihren Berührungskontakt mit dem Kettbaum verliert, dann spielt dies für die Regelung des Antriebs des Kettbaumes keine Rolle mehr, da in diesem Zeitpunkt die Kettenwirkmaschine bereits durch die Betätigung des Endschalters abgeschaltet sein kann. Bei der umgekehrten Bewegung des Schwenkarms, also bei dessen Heranführen an den Kettbaum, wird zunächst die Andrückrolle in Berührungskontakt mit dem Kettbaum gebracht, woraufhin durch Betätigung des Endschalters die Voraussetzung dafür geschaffen werden kann, daß die Kettenwirkmaschine eingeschaltet wird. Die Einschaltung der Kettenwirkmaschine erfolgt dann also stets bei bereits am Kettbaum anliegender Andrückrolle, so daß mit dem Einschalten der Kettenwirkmaschine sofort auch die Regelung des Antriebs des Kettbaumes einsetzen kann.

In den Figuren ist ein Ausführungsbeispiel der Erfindung dargestellt. Es zeigen
- **Figur 1**: in Seitenansicht den Kettbaum mit Andrückrolle in der Betriebslage,
- **Figur 2**: die gleiche Vorrichtung mit noch am Kettbaum anliegender Andrückrolle, jedoch mit teilweise verschwenktem Schwenkarm (Abschaltlage),
- **Figur 3**: die gleiche Vorrichtung mit vom Kettbaum abgehobener Andrückrolle (Außerbetriebslage).

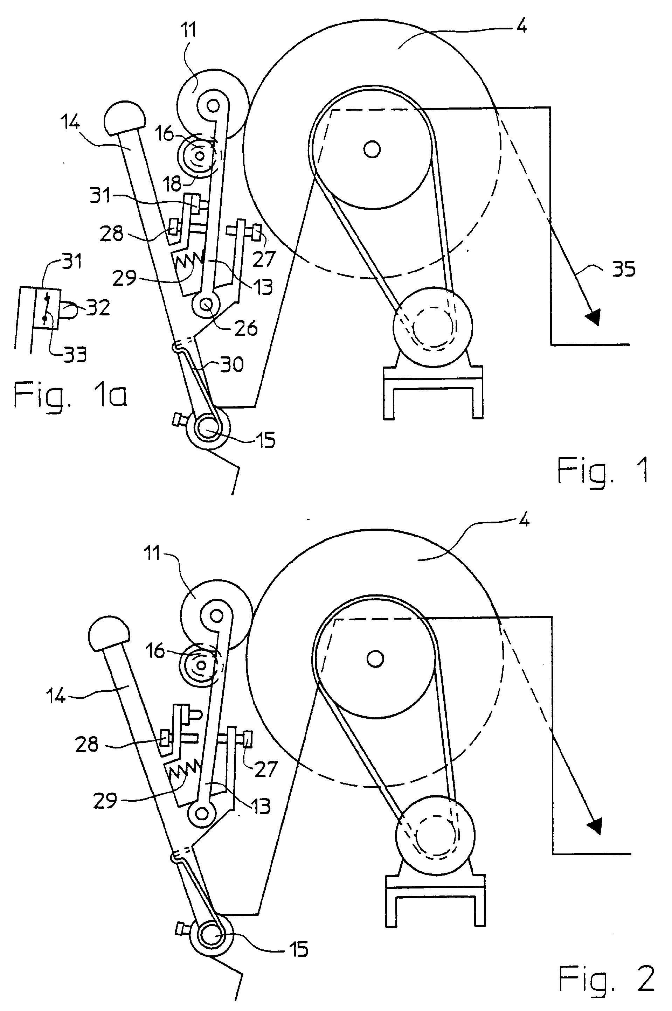

In den Figuren 1 bis 3 ist nur der in diesem Zusammenhang interessierende Teil einer Kettenwirkmaschine, nämlich der Kettbaum 4 und der Schwenkarm 14 mit den daran befestigten Bauteilen gezeigt, da es auf die sonstigen Organe einer Kettenwirkmaschine in diesem Zusammenhang nicht ankommt.

Figur 1 zeigt die Vorrichtung in der Betriebslage, in der die Andrückrolle 11 an der Oberfläche des Kettbaums 4 anliegt und von diesem mitgenommen wird. Die Andrückrolle 11 überträgt die Drehbewegung auf die Antriebsrolle 16. Diese treibt den Signalgenerator 18 zur Abgabe von Längensignalen an. Andrückrolle 11 und Antriebsrolle 16 sind auf dem Hebel 13 gelagert, der drehbeweglich mittels der Achse 26 an dem Schwenkarm 14 angelenkt ist. Der Hebel 13 kann zwischen den einstellbaren Anschlägen 27 und 28 hin und her gedreht werden, wobei er durch die Feder 29 in Richtung auf den Kettbaum 4 gedrückt wird. Der auf der Achse 15 verschwenkbar gelagerte Schwenkarm 14 wird durch die Feder 30 in Richtung auf den Kettbaum 4 vorgespannt, und zwar derart, daß die Kraft der Feder 30 diejenige der Feder 29 überwindet. In der dargestellten Betriebslage, in der die Andrückrolle 11 am Kettbaum 4 anliegt und von diesem mitgenommen wird, liegt also der Hebel 13 am Anschlag 28 an, wodurch die auf den Kettbaum 4 zu gerichtete mögliche Verschwenkbewegung des Schwenkarms 14 begrenzt ist.

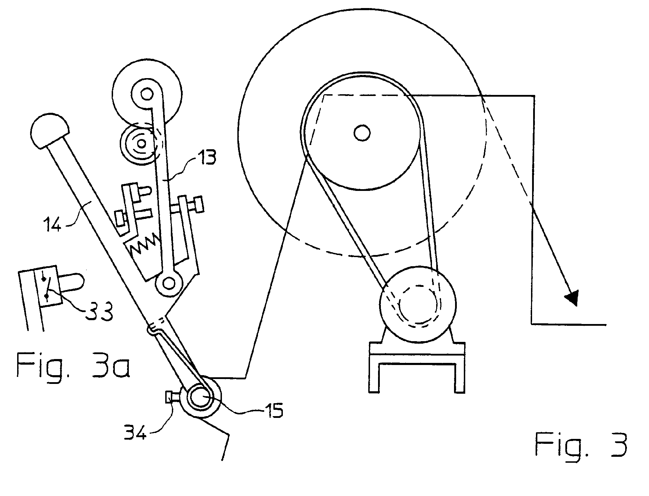

An dem Schwenkarm 14 ist der Endschalter 31 angebracht, dessen Stößel 32 (siehe vergrößerte Darstellung in Figur 1a) durch den Hebel 13 eingeschoben ist und dabei den Kontakt 33 des Endschalters 31 schließt. Das Schließen des Kontaktes 33 kann beispielsweise dazu benutzt werden, die betreffende Kettenwirkmaschine in Betrieb zu setzen und zu halten. Wenn nun aus irgendeinem Grund, insbesondere auch bei ungewollter Betätigung, der Schwenkarm 14 vom Kettbaum 4 weggeschwenkt wird, nimmt der Schwenkarm 14 die in Figur 2 dargestellte Abschaltlage ein, in der unter der Wirkung der Feder 29 der Hebel 13 vom Schwenkarm 14 weggedreht wird, wobei zunächst die Andrückrolle 11 in Berührungskontakt mit dem Kettbaum 4 verbleibt. Diese Verdrehbewegung des Hebels 13 wird schließlich, wie in Figur 2 dargestellt, vom Anschlag 27 begrenzt. Bis zum Erreichen dieser Abschaltstellung, ausgehend von der Betriebsstellung in Figur 1, bleibt die Andrückrolle 11 in Berührungskontakt mit dem Kettbaum 4, so daß also die über die Antriebsrolle 16 bewirkte Erzeugung der Längensignale zunächst aufrecht erhalten bleibt. Bei der Verdrehbewegung des Hebels 13 vom Anschlag 28 weg wird jedoch der Stößel 32 des Endschalters 31 freigegeben, so daß der Kontakt 33 öffnet (siehe vergrößerte Darstellung in Figur 3a). Damit kann durch diese Öffnung des Kontaktes 33 die Kettenwirkmaschine abgeschaltet werden, während zunächst, wie gesagt, die Andrückrolle 11 noch in Berührungskontakt mit dem Kettbaum 4 verbleibt, so daß sichergestellt ist, daß die von der Andrückrolle 11 und der Antriebsrolle 16 ausgehende Regelung der Fadenzufuhr vor Abschalten der Maschine nicht unterbrochen werden kann.

Wenn dann der Schwenkarm 14 weiter in die in Figur 3 dargestellte Außerbetriebslage verschwenkt wird, gerät die Andrückrolle 11 außer Berührungskontakt zum Kettbaum 4, womit nunmehr auch der Antrieb der Antriebsrolle 11 unterbleibt und die Abgabe der Längensignale unterbrochen wird.

An der Lagerung der Achse 15 für den Schwenkarm 14 ist der Rastbolzen 34 vorgesehen, mit dem in bekannter Weise der Schwenkarm 14 in der in Figur 3 gezeigten Außerbetriebslage verrastet gehalten wird.

Es sei noch darauf hingewiesen, daß im Falle der Verwendung mehrerer Kettbäume bzw. Legebarren die in den Figuren 1 bis 3 dargestellte Vorrichtung entsprechend mehrfach vorgesehen werden muß, womit der Abzug von Fäden 35 pro Kettbaum individuell geregelt werden kann.

Die Verwendung der Antriebsrolle, die unter Ausnutzung der Andrückrolle als Zwischenrolle vom Kettbaum angetrieben wird, ermöglicht es, diese mit einer harten, verschleißfreien Oberfläche und einem bestimmten gewünschten Durchmesser zu gestalten, so daß insbesondere eine Abnutzung der Andrückrolle für die Abgabe von Fadenlängen-Signalen ohne Einfluß bleibt. Es sei jedoch darauf hingewiesen, daß die vorstehend beschriebene Vorrichtung mit der durch den Hebel 13 betätigbaren Endschalter 31 auch dann anwendbar ist, wenn an dem Hebel nur die Andrückrolle gelagert ist und von dieser direkt ein Signalgenerator angetrieben wird.

## Patentansprüche

1. Vorrichtung zur Messung der Fadenlänge der von einem Kettbaum (4) einer Kettenwirkmaschine abgezogenen Fäden (35) mit einer mittels eines Schwenkarms (14) gegen den Wickel des Kettbaums (4) andrückbaren Andrückrolle (11), die im Verwendungsfall einen Signalgenerator (18) der Vorrichtung zur Abgabe von Längensignalen antreibt, die ein Maß für die vom Kettbaum (4) abgezogene Fadenlänge darstellen, **dadurch gekennzeichnet**, daß die Andrückrolle (11) auf einem an dem Schwenkarm (14) angelenkten, in Richtung auf den - im Verwendungsfall vorhandenen - Kettbaum (4) vorgespannten Hebel (13) derart gelagert ist, daß die Andrückrolle (11) in ihrem angedrückten Zustand den Hebel (13) vom Kettbaum (4) weg und in ihrem abgehobenen Zustand den Hebel (13) auf den Kettbaum (4) zu verdreht, wobei ein am Schwenkarm (14) angebrachter Endschalter (31) - vom Hebel (13) betätigt - im angedrückten Zustand seine eine Schaltstellung und im angehobenen Zustand eine andere Schaltstellung einnimmt, in die der Endschalter (31) beim Wegschwenken des Schwenkarmes (14) vom Kettbaum (4) weg während der Drehbewegung des Hebels (13) bei noch am Kettbaum (4) anliegender Andrückrolle (11) gelangt.

## Claims

1. Device for measuring the length of the yarns (35) drawn off from a warp beam (4) of a warp knitting machine, comprising a pressure roller (11) which can be pressed by means of a swivel arm (14) against the package of the warp beam (4), said pressure roller when used driving a signal generator (18) of the device for emitting length signals which represent a measure of the length of the yarn drawn off from the warp beam (4), characterised in that the pressure roller (11) is supported on a lever (13) hinged on to the swivel arm (14) and biased towards the warp beam (4) when used in such a manner that the pressure roller (11) pivots the lever (13) away from the warp beam (4) in its pressed state and pivots the lever (13) towards the warp beam (4) in its lifted state, a limit switch (31) actuated by the lever (13) and mounted on the swivel arm (14) adopting one position in the pressed state and another position in the lifted state, the limit switch (31) arriving at this position when the swivel arm (14) is swivelled away from the warp beam (4) during the rotating movement of the lever (13) while the pressure roller (11) still bears against the warp beam (4).

## Revendications

1. Dispositif de mesure de la longueur des fils (35) déroulés d'une ensouple de tissage (4) d'un métier chaîne, comportant un rouleau de pression (11) pouvant être pressé contre la bobine de l'ensouple (4) au moyen d'un bras pivotant (14), ledit rouleau entraînant dans la présente application un générateur de signaux (18) du dispositif pour émettre des signaux de longueur, qui représentent une mesure correspondant à la longueur de fil déroulée de l'ensouple (4),
caractérisé en ce que le rouleau de pression (11) est supporté sur un levier (13) précontraint, articulé sur le bras pivotant (14), en direction de l'ensouple (4), présente dans le cas d'application, de manière telle que le rouleau de pression (11) lorsqu'il est en position appuyée, éloigne par rotation le levier (13) de l'ensouple (14), et lorsqu'il est en position dégagée rapproche par rotation le levier (13) de l'ensouple (14), un commutateur de fin de course (31) - actionné par le levier (13) - monté sur le bras pivotant (14) adopte, lors de la position appuyée une position de commutation et, lors de la position dégagée, une autre position de commutation sur laquelle commute le commutateur de fin de course (31) lors de l'éloignement du bras pivotant (14) de l'ensouple (4) durant la rotation du levier (13) le rouleau (11) étant encore en appui contre l'ensouple (4).
